Europäisches Patentamt

European Patent Office

Office européen des brevets

(19)

(11) EP 0 372 774 B1

(12) **EUROPEAN PATENT SPECIFICATION**

(45) Date of publication and mention
of the grant of the patent:
**05.06.1996 Bulletin 1996/23**

(51) Int Cl.6: **H04N 5/44**

(21) Application number: **89312265.5**

(22) Date of filing: **27.11.1989**

(54) **Method for the conversion of a video signal display frequency**

Verfahren zur Umwandlung einer Videosignalwiedergabefrequenz

Méthode de conversion de la fréquence d'affichage d'un signal vidéo

(84) Designated Contracting States:
**AT BE CH DE ES FR GB IT LI NL SE**

(30) Priority: **09.12.1988 FI 885725**

(43) Date of publication of application:
**13.06.1990 Bulletin 1990/24**

(73) Proprietor: **Nokia Consumer Electronics Ltd.
FIN-20321 Turku (FI)**

(72) Inventors:
• **Juhola, Janne
SF-33720 Tampere (FI)**
• **Nieminen, Ari
SF-33500 Tampere (FI)**
• **Neuvo, Yrjo
SF-33720 Tampere (FI)**
• **Salo, Juha
SF-20500 Turku (FI)**

(74) Representative:
**Carpmael, John William Maurice et al
CARPMAELS & RANSFORD
43 Bloomsbury Square
London, WC1A 2RA (GB)**

(56) References cited:
**EP-A- 0 192 292          EP-A- 0 239 800**

• **PROCEEDINGS OF THE SECOND
INTERNATIONAL WORKSHOP ON SIGNAL
PROCESSING OF HDTV, L'AQUILA(IT),29FEBR
UARY-2MARCH1988,CSELT,TORINO(IT)
'T.DOYLE:"INTERLACED TO SEQUENTIAL
CONVERSION FOR EDTV APPLICATIONS"
PAGES 421-430'**
• **1986 IEEE INTERNATIONAL CONFERENCE ON
CONSUMER ELECTRONICS,ICCE 1986,DIGEST
OF TECHNICAL PAPERS, 3-6 JUNE 1986,
'T.DOYLE: "MEDIAN FILTERING OF
TELEVISION IMAGES" PAGES 186-187**

## Description

The invention relates to a method by which it is possible by digital signal processing in the receiver to reduce errors caused in the television picture by an interlaced transmission standard and by a low field frequency.

The line numbers most commonly used in a television system are 625 and 525. Line number 625 is used in most countries in which the nominal frequency of the electricity network is 50 Hz and line number 525 in general where the nominal frequency of the network is 60 Hz. The picture frequency is usually selected as being half of the nominal frequency of the electricity network, i.e. 25 or 30 Hz. The PAL and SECAM standards are based on an interlaced 50 Hz field frequency and the NTSC standard on an interlaced 60 Hz field frequency. In order to reduce disturbance caused by the "blinking" of the picture and to limit the necessary transmission band, a television picture is interlaced 2:1. This means that each individual picture is transmitted as two image fields. The first field comprises the odd lines (1, 3, 5...) and the second field the even ones (2, 4, 6...).

The interlacing of the display and the low field frequency cause visible problems in the television picture. High vertical frequencies cause blinking between the lines, which is visible at a frequency of 25 Hz (PAL, SECAM). Large bright areas blink at a frequency of 50 Hz. When the object moves its details become unsharp as the viewer distinguishes the different fields when following the object. This phenomenon is called line crawl. When the picture is viewed from a relatively short distance, the structure of the picture, consisting of lines, can be observed.

A number of different solutions have been suggested for reducing picture blinking and line crawl.

In a television receiver it is possible, by means of an image memory and digital signal processing, to increase the display frequency so that the above-mentioned phenomena are transferred to higher frequencies, whereupon the human eye can no longer distinguish them. The present-day interlaced transmission standard 50 Hz/2:1 can be converted either to non-interlaced 50 Hz/l:l or to interlaced 100 Hz/2:1. The former reduces line blinking and line crawl, and increases the feeling of sharpness of the picture, but leaves the problem of blinking of large areas. The latter also reduces the blinking of large areas.

In field frequency conversion, the required fields which are lacking must be interpolated in the receiver. Many methods have been developed for this interpolation. In the stationary parts of the picture the conversion should utilize the preceding-field information, thus increasing image resolution, and in moving areas to eliminate the unsharpness due to the movement.

The simplest conversion methods include line repetition and line averaging. However, both of these methods reduce resolution in the stationary parts of the picture. More complicated methods use compensation of movement, aiming at transferring, on the basis of movement vectors, the information of the old lines to their place in the new field. However, the methods are computationally too demanding to be implemented in ordinary home receivers. Solutions based on median filtering, among others, have been presented as compromises. A scan conversion method of this type is presented in 1986 IEEE International Conference on Consumer Electronics, ICCE 1986, Digest of Technical Papers, 3-6 June 1986, pp. 186-187, T. Doyle: "Median Filtering of Television Images". In the principal solution of this publication three spatially consecutive lines, two from the current field and one from the preceding field, are connected as three inputs to the median filter, the output of which is the median in amplitude of these three lines and the interpolated line. This simple algorithm does not provide very goods results in all cases, and so the publication presents additional filtering solutions to be combined to this simple median filter which make the use of this solution more complicated.

The object of the present invention is to eliminate the problems involved in the methods described above and to produce an improved picture quality. This is achieved by the method according to the characterizing clause of Claim 1.

Median filtering is a non-linear filtering method which has been used with success in many applications. Median filtering is based on the organization of the filter inputs and on the selection of the median value as the output of the filter (note: an odd number of numbers to be organized). In a weighted median filter, some samples are included several times in the calculation of the medians. Linear-median filters are filters in which linear substructures are utilized. By means of these it is possible to alter the properties of median filters. The typical properties of median filters include good ramp function and strip function responses and attenuation of impulse-type noise.

The invention is a filter family the structure of which implicitly carries out movement recognition and automatically carries out a selection between temporal and spatial interpolation. The filter family is by its structure a weighted median filter in which linear sub-structures are used. The filter functions in a 3*3 pixel window so that the center line has information regarding the old preceding field and the two other lines regarding the arriving field. In the filter input there is information regarding what is above and below the pixel in the newly arrived lines. On the basis of this information, the filter interpolates a new pixel. In stationary areas the filter tends to select the old dot and in areas in which the surroundings differ from the old pixel value, the pixel is selected so as to fit the surroundings. The structure of the filter tends implicitly to retain the lines in the picture.

The method according to the invention is described in greater detail with reference to the accompanying figures, in which

Figure 1 depicts the principle of picture frequency conversion (50 Hz/2:1 → 50 Hz/1:1) by line averaging,
Figure 2 depicts the principle of picture frequency conversion (50 Hz/2:1 → 50 Hz/1:1) by line repetition,
Figure 3 depicts a block diagram of picture frequency conversion (50 Hz/2:1 → 50 Hz/1:1),
Figure 4 depicts the principle of picture frequency conversion (50 Hz/2:1 → 50 Hz/1:1) by means of a weighted median filter, and
Figure 5 depicts the principle of picture frequency conversion (50 Hz/2:1 → 100 Hz/2:1).

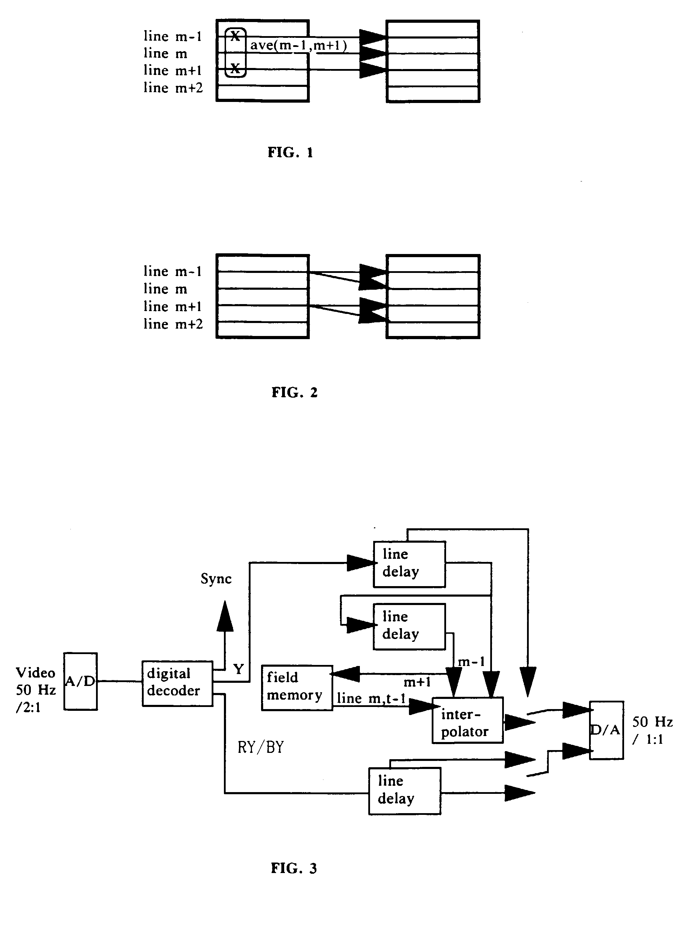

Figure 1 depicts the above-mentioned principle of line averaging. Transmission standard 50 Hz/2:1 is converted to non-interlaced 50 Hz/1:1. In interlacing 1:1, line m is obtained as the average of lines m-1 and m+1 of the 50 Hz/2:1 line standard.

Figure 2 depicts the principle of line repetition, also mentioned above. Standard 50 Hz/2:1 is converted to non-interlaced 50 Hz/1:1. In this method the lacking line m is obtained by repeating the line m-1, as shown in the figure.

Figure 3 depicts a general block diagram of picture frequency conversion. The different methods, for example the said line averaging and line repetition are implemented by altering the content of the interpolator block.

In the invention, a weighted median filter is used in the interpolator block, and its filter family for the interpolation of pixel n for the new line m can be expressed by means of the expression:

$$\text{MED } [x(n-1,m-1,t), x(n,m-1,t), x(n+1,m-1,t)\; x(n-1,m+1,t), x(n,m+1,t), x(n+1,m+1,t), a^* x(n,m,t-1), b^* \overline{X}(n,m,t)] \quad (1)$$

$$\overline{X}(n,m,t) = 1/2[x(n,m-1,t) + x(n,m+1,t)]$$

wherein $x(n,m,t)$ generally presents pixel n of line m of field t,

n-1, n, n+1 and respectively m-1, m, m+1 indicate the position of the pixel and respectively the line of the pixel as compared to the position n and respectively the line m of the pixel to be generated,

t and t-1 indicate respectively the current field and the preceding field,

a and b are coefficients indicating the weighting, * is an operator indicating weighting, and $\overline{X}(n,m,t)$ is a preliminary estimate for a new dot $x(n,m,t)$ (line averaging). The character of the filter can be altered by means of the weighting coefficients. When coefficient a is increased and coefficient b is reduced, the filter sees more of the old line and is better suited for stationary pictures. When coefficient b is increased and coefficient a is reduced, the filter emphasizes new lines more and is better suited for a moving picture. A sensible variation range for the coefficients is 0-3. With higher coefficient values, better results are no longer achieved.

By using coefficient values a=3, b=0, the best result is achieved for a stationary picture. The filter retains even thin lines which are not horizontal. None of the presented methods not based on compensation of movement is capable of retaining narrow horizontal lines. In a moving picture, unsharpness is left partly visible in the moving edges. The operation of the filter is quite close to the direct feeding in of the preceding field.

By using coefficients a=0, b=3, the best result is achieved for a picture which contains movement. The filter eliminates almost completely the unsharpness caused by movement. The highest possible resolution is not achieved with a stationary picture. The operation of the filter is rather close to line averaging.

By using coefficients a=2, b=1, a good compromise structure is achieved which works for both moving and stationary objects. The test was performed by examining the test pictures both visually and statistically.

By using a simple movement detector it is easy to select the filter structure suitable for pixel interpolation, depending on the content of the picture. This complicates the implementation.

The properties of the filters include the attenuation of impulse-like noise typical in connection with satellite broadcasts. The noise in the broadcast does not greatly disturb the operation of the filter, and the noise is strongly attenuated in the interpolated lines.

In a video signal, it is luminance that contains the greatest amount of significant information. In conversion, chrominance which has a less dense resolution does not have an equal importance in terms of the final result. The same conversion method can also be used for chrominance, but line repetition, which is simple, can be used as well.

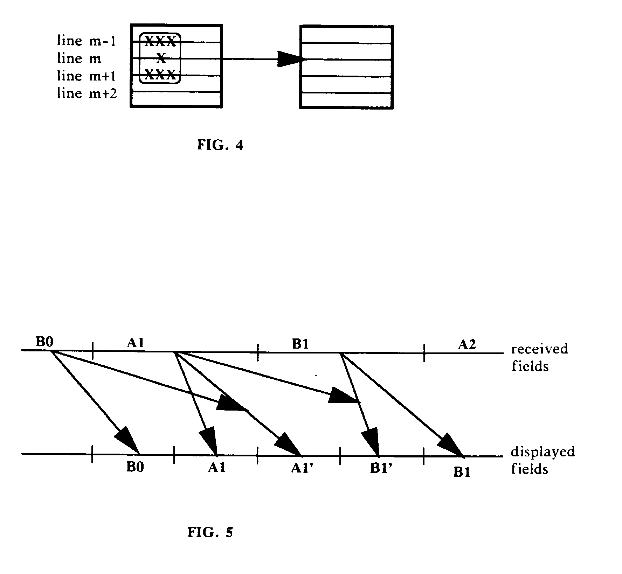

The conversion 50 Hz/2:1 → 50 Hz/1:1 is carried out according to Figure 4 by using, for example, circuitry according to the block diagram in Figure 3. Memory space in the receiver is required for one field and two lines. When the line has been received, it is displayed at double speed and a new line (m,t) is interpolated under it. The received line (m-1,t), the old line (m+1,t) obtained from the line memory are used in the interpolation. As regards a color signal, one line memory and line repetition can be used. One whole picture for each field which has arrived is displayed. Conversion from interlaced to non-interlaced can be used in order to obtain a sharp still picture in, for example, a video tape recorder.

Conversion 50 Hz/2:1 → 100 Hz/2:1 takes place according to Figure 5. Memory space for one picture and two lines is required in the receiver. Field A1 indicates an even field relating to picture 1 and B1 an odd field belonging to the same picture. The fields indicated by prime are interpolated. The conversion can be implemented as follows: when half of field A1 has been received, its display begins. The display speed is double the reception speed. After field A1 there is shown field A1′, which is interpolated on the basis of field B0 previously in the memory and field A1. At the same time, field B1 is being received, which can be placed over field B0 in the memory. After field A1′, field B1′ is displayed, which for its part is interpolated from fields A1 and B1. Thereafter B1 from the memory is displayed and field A2 is received. Thus, during one transmitted picture (two fields), there are shown two pictures in which one field is the transmitted one and the other is interpolated.

By the method according to the invention a picture is accomplished which eliminates well the unsharpness caused by movements, and the thin lines which are not horizontal are retained. Owing to a higher display frequency, the picture does not blink.

The present-day VLSI technique enables the filter to be implemented and taken into use. From the viewpoint of the implementation it should be noted that calculating the median of nine dots is not computationally more cumbersome than is the median of seven dots, if the median of nine dots includes the same sample three times. Present-day monitor technology is capable of producing displays which can operate at the required higher frequency. The method according to the invention can also be utilized when forming a still picture from an interlaced video signal.

## Claims

1. A digital signal processing method for scan conversion of an interlaced low field frequency video signal in order to increase display frequency, wherein each of the temporally subsequent fields of said interlaced low field frequency video signal is formed by spatially subsequent lines each composed by spatially subsequent pixels and wherein new lines are interpolated from the lines of the current field and the lines of the preceding field by using median filtering, **characterized** in that each pixel n of each new line m is interpolated by weighted median filtering according to the expression

$$\text{MED} [x(n-1,m-1, t), x(n,m-1,t), x(n+1,m-1,t), x(n-1,m+1,t), x(n,m+1,t),$$

$$x(n+1,m+1,t), a*x(n,m,t-1), b*X(n,m,t)]$$

   wherein

   $x(n,m,t)$ generally presents pixel n of line m of field t,
   n-1, n, n+1 and respectively m-1, m, m+1 indicate the position of the pixel and respectively the line of the pixel as compared to the position n and respectively the line m of the pixel to be interpolated,
   t and t-1 indicate respectively the current field and the preceding field,
   a and b are weighting coefficients,
   * is the operator indicating the weighting, and
   $X(n,m,t)$ is a preliminary estimate for the pixel to be interpolated, according to the equation

$$X(n,m,t) = 1/2 \times [x(n,m-1,t) + x(n,m+1,t)].$$

2. A method according to Claim 1, **characterized** in that the interlaced low field frequency video signal (50 Hz/2:1; 60 Hz/2:1) is converted to a non-interlaced video signal (50 Hz/1:1;60 HZ/1:1) of the same frequency.

3. A method according to Claim 1, **characterized** in that the interlaced low field frequency video signal (50 Hz/2:1; 60 Hz/2:1) is converted to an interlaced video signal (100 Hz/2:1; 120 Hz/2:1) of doubled field frequency.

4. A method according to any of the preceding Claims, **characterized** in that the weighting coefficients a and b are selected on the basis of the detected movement in the picture formed by said temporally subsequent fields.

## Patentansprüche

1. Digitales Signalverarbeitungsverfahren für die Abtastumwandlung eines Videosignals mit niedriger gerasterter Halbbildfrequenz zur Erhöhung der Anzeigefrequenz, bei dem jedes der zeitlich aufeinander folgenden Halbbilder des besagten Videosignals mit niedriger gerasterter Halbbildfrequenz aus räumlich aufeinanderfolgenden Zeilen, die wiederum aus räumlich aufeinanderfolgenden Punkten zusammengesetzt sind, gebildet ist, wobei neue Zeilen aus den Zeilen des laufenden Halbbildes und den Zeilen des vorangegangenen Halbbildes durch Herausfiltem eines Medianwertes interpoliert werden, **dadurch gekennzeichnet, daß** jeder Punkt n einer neuen Zeile m durch gewichtetes Herausfiltem eines Medianwertes entsprechend der Formel:

MED [x(n-1,m-1,t), x(n,m-1,t), x(n+1,m-1,t), x(n-1,m+1,t), x(n,m+1,t), x(n+1,m+1,t), a*x(n,m,t-1), b*X(n,m,t)] interpoliert wird,

wobei x(n,m,t) allgemein Punkte n der Linie m des Rasterbildes t bezeichnet,

n-1,n,n+1 und entsprechend m-1,m,m+1 bezeichnen die Position des Punktes und entsprechend der Linie des Punktes im Vergleich zu der Position N und entsprechend der Zeile M des zu erstellenden Punktes,

t und t-1 bezeichnen das laufende Halbbild und das vorhergehende Halbbild,

a und b sind Koeffizienten, die die Gewichtung angeben,

* ist eine Verknüpfung, die die Gewichtung angibt,

X(n,m,t) ist eine vorläufige Schätzung für einen neuen Punkt x(n,m,t) (Zeilenmittelwertbildung).

2. Ein Verfahren entsprechend Anspruch 1, **dadurch gekennzeichnet, daß** das Videosignal mit niedriger gerasterter Halbbildfrequenz (50 Hertz/2 : 1; 60 Hertz/2 : 1) in ein ungerastertes Videosignal (50 Hertz/1 : 1; 60 Hertz/1 : 1) derselben Frequenz konvertiert wird.

3. Ein Verfahren entsprechend Anspruch 1, **dadurch gekennzeichnet, daß** das Videosignal mit niedriger gerasterter Halbbildfrequenz (50 Hertz/2 : 1; 60 Hertz/2 : 1) zu einem gerasterten Videosignal (100 Hertz/2 : 1; 120 Hertz/2 : 1) von doppelter Halbbildfrequenz konvertiert wird.

4. Ein Verfahren entsprechend einem der vorangegangenen Ansprüche, **dadurch gekennzeichnet, daß** die Gewichtungskoeffizienten a und b auf der Basis der abgetasteten Bewegung in dem Bild, das durch die besagten zeitlich aufeinanderfolgenden Halbbilder erzeugt wird, ausgewählt werden.

## Revendications

1. Un procédé de traitement d'un signal numérique, pour la conversion, lors du balayage, d'un signal vidéo situé dans le domaine des basses fréquences et entrelacé de manière à augmenter la fréquence d'affichage, dans lequel chacune des zones temporairement successives dudit signal vidéo à basse fréquence entrelacé est constituée par des lignes spatialement subséquentes, constituées chacune par des pixels spatialement subséquents et dans laquelle de nouvelles lignes sont obtenues par interpolation à partir des lignes de la zone en cours et des lignes de la zone précédente par utilisation d'un filtrage médian, caractérisé en ce que chaque pixel n de chaque nouvelle m est l'objet d'une interpolation avec un filtrage médian à pondération, conduit selon l'expression

MDE [x(n-1,m-1,t), x(n,m-1,t), x(n+1,m-1,t), x(n-1,m+1,t), x(n,m+1,t), x(n+1,m+1,t),a*x(n,m,t-1),b*X(n,m,t)]

dans laquelle

X(n,m,t) désigne globalement le pixel n de la ligne m de la zone t,

n-1, n, n+1 et respectivement m-1,m,m+1 indiquent la position du pixel et respectivement de la ligne du pixel comparée à la position n et respectivement à la ligne m du pixel à interpoler,

t et t-1 indiquent respectivement la zone en cours et la zone précédente,

a et b sont des coefficients de pondération,

* est l'opérateur indiquant la pondération, et

X(n,m,t) est une estimation préliminaire du pixel à interpoler selon l'équation

5

$$X(n,m,t) = 1/2x[x(n,m-1,t) + x(n,m+1,t)].$$

2. Un Procédé selon la revendication 1, caractérisé en ce que le signal vidéo à basse fréquence entrelacé (50 Hz/2: 1; 60 Hz/2:1) est converti en un signal vidéo non entrelacé (50 Hz/1:1; 60 Hz/1:1) de la même fréquence.

3. Un procédé selon la revendication 1, caractérisé en ce que le signal vidéo basse fréquence entrelacé (50 Hz/2:1; 60 Hz/2:1) est converti en un signal vidéo entrelacé (100 Hz/2:1; 120 Hz/2:1) dont la fréquence de zone est doublée.

4. Un procédé selon l'une des revendications précédentes, caractérisé en ce que les coefficients de pondération a et b sont sélectionnés sur la base du déplacement détecté dans l'image formée par lesdites zones temporairement subséquentes.

**FIG. 1**

**FIG. 2**

**FIG. 3**

line m-1
line m
line m+1
line m+2

**FIG. 4**

B0    A1    B1    A2    received fields

B0    A1    A1'    B1'    B1    displayed fields

**FIG. 5**